# EUROPÄISCHE PATENTSCHRIFT

(11) **EP 3 704 930 B1**
(45) Veröffentlichungstag und Bekanntmachung des Hinweises auf die Patenterteilung: **07.02.2024**
(21) Anmeldenummer: 19213868.3
(22) Anmeldetag: 05.12.2019
(51) Int. Cl.: A01D 41/127, A01D 43/08, G01N 21/3563, G01N 21/359

(54) **LANDWIRTSCHAFTLICHE ERNTEMASCHINE SOWIE VERFAHREN ZUM BETREIBEN EINER LANDWIRTSCHAFTLICHEN ERNTEMASCHINE**
AGRICULTURAL HARVESTER AND METHOD FOR OPERATING AN AGRICULTURAL HARVESTER
ENGIN D'ABATTAGE-FAÇONNAGE AGRICOLE AINSI QUE PROCÉDÉ DE FONCTIONNEMENT D'UN ENGIN D'ABATTAGE-FAÇONNAGE AGRICOLE

(30) Priorität: 08.03.2019 DE 102019105982
(43) Veröffentlichungstag der Anmeldung: 09.09.2020
(73) Patentinhaber: CLAAS Selbstfahrende Erntemaschinen GmbH, 33428 Harsewinkel (DE)
(72) Erfinder: Sander, Stefan, 33775 Versmold (DE); Escher, Matthias, 49134 Wallenhorst-Rulle (DE); Grove, Carsten, 48361 Beelen (DE); Kirchbeck, Alexander, 48137 Drensteinfurt (DE)
(74) Vertreter: CLAAS Gruppe

(56) Entgegenhaltungen:
- EP-A1- 1 894 461
- EP-A1- 3 130 213
- EP-A1- 3 444 577
- WO-A1-2016/001572
- US-A1- 2017 115 211

## Beschreibung

Die vorliegende Erfindung betrifft eine landwirtschaftliche Erntemaschine gemäß dem Oberbegriff des Anspruches 1. Des Weiteren betrifft die vorliegende Erfindung ein Verfahren zum Betreiben einer landwirtschaftlichen Erntemaschine gemäß dem Oberbegriff des Anspruchs 11.

Eine Erntemaschine sowie ein Verfahren der eingangs genannten Art sind aus der EP 1 407 654 B1 und der EP 3 444 577 A1 bekannt. Darin ist eine Erntemaschine beschrieben, die eine Sensoreinrichtung zur Inhaltsstofferfassung von landwirtschaftlichem Erntegut aufweist. Die Sensoreinrichtung verfügt über einen auf Basis der Nahinfrarotspektroskopie arbeitenden Sensor (NIR-Sensor), an dem ein Erntegutstrom vorbeigeführt wird. Mittels des NIR-Sensors werden organische sowie anorganische Inhaltsstoffe des Erntegutes erfasst und quantifiziert. Zur Auswertung der von dem NIR-Sensor bereitgestellten Signale ist eine Auswertevorrichtung an der Erntemaschine vorgesehen.

Neben der Bestimmung von Inhaltsstoffen des von der Erntemaschine aufgenommenen Erntegutes ist es in Abhängigkeit von einem dem durch die Erntemaschine durchgeführten Erntevorgang nachgeordneten Weiterbehandlungsprozesses von Bedeutung, den physischen Zustand von in dem Erntegut enthaltenen Kornbestandteilen zu kennen.

Beispielsweise wird das Erntegut einer Silierung unterzogen, um Futtermittel zu erzeugen. Zu diesem Zweck wird das Erntegut, bei dem es sich insbesondere um zerkleinerte Maispflanzen handelt, in einem Silo abgelegt und dort verdichtet, um Luft herauszupressen und einen aeroben Abbau durch Pilze und Bakterien zu verhindern. Anschließend wird die verdichtete Masse abgedeckt gelagert, wodurch ein Gärprozess in Gang gesetzt wird, der die Masse in sogenannte Silage umwandelt. Für die Verdaubarkeit der Silage durch Tiere, insbesondere durch Wiederkäuer, ist es wesentlich, dass die Kornbestandteile aufgeschlossen sind. Dies wird beispielsweise bei der Ernte von Mais durch eine als Feldhäcksler ausgeführte Erntemaschine mittels einer Nachzerkleinerungsvorrichtung, die beispielsweise als Scheibencracker ausgeführt sein kann, erreicht.

Die Druckschrift EP 2 232 978 A1 offenbart einen Feldhäcksler mit einer Nachzerkleinerungsvorrichtung, bei dem ein Erntegutstrom durch die Nachzerkleinerungsvorrichtung geleitet wird, um die im Erntegutstrom enthaltenen Kornbestandteile aufzubrechen. Der Erntegutstrom wird mit einer Kamera überwacht. Eine Steuereinheit erfasst anhand der Kamerabilder die ganzen Körner und die aufgebrochenen Kornbestandteile im Erntegutstrom. In Abhängigkeit von dem Verhältnis von ganzen Körnern zu aufgebrochenen Kornbestandteilen wird die Nachzerkleinerungsvorrichtung eingestellt.

Aufgabe der vorliegenden Erfindung ist es, eine Erntemaschine sowie ein Verfahren zum Betreiben einer Erntemaschine der eingangs genannten Art derart weiterzubilden, dass eine Detektion des Aufschlussgrades der Kornbestandteile mit einem geringeren Aufwand ermöglicht.

Diese Aufgabe wird erfindungsgemäß durch eine landwirtschaftliche Erntemaschine gemäß dem Anspruch 1 gelöst. Weiterhin wird die Aufgabe durch ein Verfahren zum Betreiben einer landwirtschaftlichen Erntemaschine gemäß dem unabhängigen Anspruch 11 gelöst.

Vorteilhafte Weiterbildungen sind jeweils Gegenstand der von den unabhängigen Patentansprüchen abhängigen Unteransprüche.

Gemäß dem Anspruch 1 wird eine Erntemaschine vorgeschlagen, umfassend ein Vorsatzgerät zur Aufnahme von Kornbestandteile enthaltendem Erntegut, zumindest ein Arbeitsaggregat zur Bearbeitung des aufgenommenen Ernteguts sowie eine Überladevorrichtung, wobei das von dem Vorsatzgerät aufgenommene Erntegut die Erntemaschine als Erntegutstrom durchläuft, wobei entlang des Erntegutstromes dem zumindest einen Arbeitsaggregat ein NIR-Sensor (Nahinfrarotsensor) nachgeordnet angeordnet ist, welcher den Erntegutstrom erfasst und dass eine Auswertevorrichtung die Signale des NIR-Sensors empfängt und analysiert, wobei die Analyse der Signale auf die Bestimmung eines Aufschlussgrades der in dem Erntegutstrom enthaltenen Kornbestandteile gerichtet ist. Erfindungsgemäß wird ein bereits an der Erntemaschine vorhandener NIR-Sensor, welcher bereits zur Detektion von Inhaltsstoffen im Erntegutstrom eingesetzt wird, verwendet, um zudem den Aufschlussgrad der in dem Erntegutstrom enthaltenen Kornbestandteile zu bestimmen. Die Verwendung einer Kamera, wie sie aus dem Stand der Technik zur Bestimmung des Aufschlussgrades bekannt ist, kann somit ebenso entfallen wie eine hierfür erforderliche Vorrichtung zur Bildverarbeitung und Bildauswertung. Insbesondere ermöglichen die Verwendung des NIR-Sensors und die Analyse der vom NIR-Sensor bereitgestellten Signale durch die Auswertevorrichtung eine Echtzeitverarbeitung, um den Aufschlussgrad der Kornbestandteile im Erntegutstrom unter den aktuell herrschenden Betriebsbedingungen der Erntemaschine zu bestimmen. Der zu bestimmende Aufschlussgrad beschreibt den physischen Zustand eines Kornbestandteiles nach dessen Bearbeitung durch das zumindest eine Arbeitsaggregat. D.h. es wird die Struktur des Kornbestandteiles unabhängig von der Größe des Kornbestandteiles bestimmt. Ein aus einem ganzen Korn bestehender Kornbestandteil, der lediglich gequetscht oder nur aufgespalten, jedoch nicht in zumindest zwei Teile aufgeteilt, wurde, ist beispielsweise bei einer späteren Verwendung als Futtermittel von einem Wiederkäuer schlecht verdaubar, unabhängig davon ob es sich um ein großes oder kleines Korn handelt.

Bevorzugt kann in Abhängigkeit von dem bestimmten Aufschlussgrad der Kornbestandteile wenigstens ein Betriebsparameter des zumindest einen Arbeitsaggregates einstellbar sein. Auf diese Weise kann ein den Aufschlussgrad der Kornbestandteile beeinflussender Betriebsparameter, insbesondere kontinuierlich, angepasst werden, um auf sich ändernde Erntebedingungen zu reagieren. Sich ändernde Erntebedingungen können beispielsweise unterschiedliche Sorten innerhalb einer Erntepflanzenart oder unterschiedliche abzuerntende Felder sein. Weiterhin kann eine Erntebedingung die Feuchtigkeit des Erntegutes sein. Durch die Anpassung des wenigstens einen Betriebsparameters kann ein im Wesentlichen gleichmäßiges Arbeitsergebnis bei sich ändernden Erntebedingungen erzielt werden.

Hierzu kann die Einstellung des wenigstens einen Betriebsparameters automatisch oder nach einer Bestätigung durch eine Bedienperson der Erntemaschine erfolgen. Die automatische Einstellung des wenigstens einen Betriebsparameters kann dabei durch die Auswertevorrichtung oder eine weitere Steuereinheit erfolgen. Bei einer Bestätigung durch eine Bedienperson der Erntemaschine wird dieser vorab ein neuer Wert für den wenigstens einen Betriebsparameter vorgeschlagen, der erst durch die Bestätigung durch die Bedienperson Anwendung findet.

Insbesondere kann die Auswertevorrichtung eine Speichervorrichtung umfassen, in welcher eine mit Referenzwerten für unterschiedliche Aufschlussgrade enthaltene Datenbank hinterlegt ist. Hierdurch ist ein unmittelbarer Vergleich der ausgewerteten, von dem NIR-Sensor bereitgestellten Signalen mit den Referenzwerten möglich, um den Aufschlussgrad der durch den NIR-Sensor erfassten Kornbestandteile zu bestimmen. Insbesondere können eine Vielzahl von Referenzwerten für unterschiedliche Aufschlussgrade unter Berücksichtigung von Sorte und/oder Feuchtigkeitsgehalt des Erntegutes hinterlegt sein. Dabei ist vorteilhaft, dass durch nur einen an der Erntemaschine angeordneten NIR-Sensor neben dem Aufschlussgrad gleichzeitig auf den Feuchtigkeitsgehalt geschlossen werden kann.

Bevorzugt kann die Bestimmung des Aufschlussgrades der in dem Erntegutstrom enthaltenen Kornbestandteile anhand eines Vergleichs von Farbspektren durch die Auswertevorrichtung erfolgen. Die durch den NIR-Sensor erfassten Farbspektren variieren je nach Aufschlussgrad der Kornbestandteile.

Weiterhin kann in Abhängigkeit von zumindest einem Betriebsparameter des zumindest einen Arbeitsaggregates eine Kategorisierung von Aufschlussgradvorgabewerten vorgesehen sein, welche die Auswertevorrichtung zur Analyse der durch den NIR-Sensor erfassten Farbspektren zur Bestimmung Aufschlussgrades verwendet. Hierzu können vorzugsweise die erfassten Farbspektren einer Vielzahl von Kornbestandteilen miteinander vergleichen werden. Bevorzugt kann eine statistische Auswertung der in Echtzeit erfassten Farbspektren zur Anwendung kommen, um eine Kategorisierung der Aufschlussgrade anhand der Aufschlussgradvorgabewerte vornehmen zu können.

Bevorzugt kann die Erntemaschine als Feldhäcksler oder Mähdrescher ausgebildet sein. Insbesondere bei der Ernte von zu silierenden Pflanzen durch einen Feldhäcksler kommt dem Aufschluss der Kornbestandteile eine besondere Bedeutung zu, um eine gute Verdaubarkeit durch Wiederkäuer zu gewährleisten. Bei einem Mähdrescher kann die Analyse der Signale, die auf die Bestimmung eines Aufschlussgrades der in dem Erntegutstrom enthaltenen Kornbestandteile gerichtet ist, der Bestimmung von Bruchkorn dienen.

Vorzugsweise kann das zumindest eine Arbeitsaggregat eine Nachzerkleinerungsvorrichtung sein. Die Nachzerkleinerungsvorrichtung eines Feldhäckslers dient dazu, Kornbestandteile aufzuschließen, d.h. die Kornbestandteile durch mechanische Bearbeitung in zumindest in zwei Teile aufzuteilen. Der erreichbare Aufschlussgrad wird durch wenigstens einen einstellbaren Betriebsparameter der Nachzerkleinerungsvorrichtung bestimmt.

Hierbei kann als Betriebsparameter ein Abstand von Walzen und/oder eine Differenzdrehzahl der Walzen der Nachzerkleinerungsvorrichtung einstellbar sein. Mit abnehmendem Abstand der Walzen der Nachzerkleinerungsvorrichtung nimmt der Aufschlussgrad der Kornbestandteile zu. Zugleich steigen die Leistungsaufnahme der Nachzerkleinerungsvorrichtung und damit der Betriebsmittelverbrauch der Erntemaschine signifikant an. Durch die Bestimmung des Aufschlussgrades der Kornbestandteile mittels des NIR- Sensors lässt sich der Abstand der Walzen an die jeweils bestehenden Erntebedingungen anpassen. Somit können die Walzen der Nachzerkleinerungsvorrichtung nur mit dem für den erforderliche Aufschlussgrad notwendigen Abstand betrieben werden. Zusätzlich oder alternativ kann die Differenzdrehzahl der Walzen in Abhängigkeit vom bestimmten Aufschlussgrad angepasst werden, um den erforderlichen Aufschlussgrad zu erreichen bzw. einzuhalten. Damit einhergehend wird auch der Betrieb der Nachzerkleinerungsvorrichtung entsprechend der jeweils bestehenden Erntebedingungen optimiert.

Insbesondere kann ein an der Nachzerkleinerungsvorrichtung auftretender Verschleiß durch die Bestimmung des Aufschlussgrades detektierbar sein. Führen die Walzen in Abhängigkeit vom bestimmten Aufschlussgrad durchgeführten Anpassungen des Abstandes der Walzen und/oder der Differenzdrehzahl der Walzen nicht zu dem erforderlichen Aufschlussgrad, so kann dies als ein Indikator für den Verschleiß der Walzen der Nachzerkleinerungsvorrichtung gewertet werden.

Weiterhin wird die eingangs gestellte Aufgabe durch ein Verfahren gemäß dem unabhängigen Anspruch 11 gelöst.

Gemäß dem Anspruch 11 wird ein Verfahren zum Betreiben einer landwirtschaftlichen Erntemaschine, umfassend ein Vorsatzgerät zur Aufnahme von Kornbestandteile enthaltendem Erntegut, zumindest ein Arbeitsaggregat zur Bearbeitung des aufgenommenen Ernteguts sowie eine Überladevorrichtung, wobei das vom Vorsatzgerät aufgenommene Erntegut die Erntemaschine als Erntegutstrom durchläuft, wobei entlang des Erntegutstromes dem zumindest einen Arbeitsaggregat ein NIR-Sensor nachgeordnet angeordnet ist, durch welchen der Erntegutstrom erfasst wird, und dass die Signale des NIR-Sensors von einer Auswertevorrichtung empfangen und analysiert werden, wobei durch die Analyse der von dem NIR-Sensor bereitgestellten Signale ein Aufschlussgrad der in dem Erntegutstrom enthaltenen Kornbestandteile bestimmt wird. Hierdurch kann eine fortlaufende Überwachung des Aufschlussgrades erreicht werden, um ein im Wesentlichen konstantes Arbeitsergebnis der Erntemaschine zu erreichen.

Dabei können zur Bestimmung des Aufschlussgrades Farbspektren der Kornbestandteile miteinander verglichen werden. Je nach Aufschlussgrad der Kornbestandteile variieren die Farbspektren, die von dem NIR-Sensor erfasst werden. Durch eine statistische Auswertung der Häufigkeit unterschiedlicher Farbspektren im Erntegutstrom kann eine Eingruppierung vorgenommen werden.

Insbesondere können durch die Auswertevorrichtung Korrelationen der von dem NIR-Sensor bereitgestellten Signale bestimmt und mit in einer Speichervorrichtung hinterlegten Korrelationswerten für unterschiedliche Aufschlussgrade verglichen werden. Mittels der spektralen Informationen des NIR-Sensors und den bekannten, in der Speichervorrichtung hinterlegten Korrelationswerten für unterschiedliche Aufschlussgrade kann ein mathematischer Zusammenhang zwischen diesen beiden Parametern hergestellt werden. Anhand der Korrelation der detektierten Farbspektren mit den Korrelationswerten in der Auswertevorrichtung wird eine Kategorisierung vorgenommen, um den jeweiligen Aufschlussgrad zu bestimmen. Die Kategorisierung ermöglicht die Zuordnung von Aufschlussgraden zu verschiedenen einstellbaren Abstandswerten und/oder Drehzahldifferenzwerten, mit denen beispielsweise Walzen einer Nachzerkleinerungsvorrichtung eines Feldhäckslers betrieben werden können.

Bevorzugt kann in Abhängigkeit von dem bestimmten Aufschlussgrad der Kornbestandteile wenigstens ein Betriebsparameter des zumindest einen Arbeitsaggregates angepasst werden. Dadurch kann ein konstantes Arbeitsergebnis erreicht werden. Änderungen der Erntebedingungen können dabei, insbesondere automatisch, berücksichtigt werden.

Die vorliegende Erfindung wird nachstehend anhand eines in den Zeichnungen dargestellten Ausführungsbeispieles näher erläutert.

Es zeigen:
- Fig. 1: schematisch eine Seitenansicht einer Erntemaschine; und
- Fig. 2: exemplarisch schematisch dargestellte Kornbestandteile vor einer Bearbeitung sowie Kornbestandteile nach der Bearbeitung durch eine Nachzerkleinerungsvorrichtung der Erntemaschine.

Die vorschlagsgemäße landwirtschaftliche Erntemaschine und das vorschlagsgemäße Verfahren zum Betreiben der Erntemaschine erlauben eine Ansteuerung und insbesondere Parametereinstellung eines oder mehrerer Arbeitsaggregate 2, 3, 4, 5, die Bestandteil der Erntemaschine 1 sind und zur Unterstützung oder Verrichtung landwirtschaftlicher Arbeit, insbesondere eines Erntevorganges, dienen.

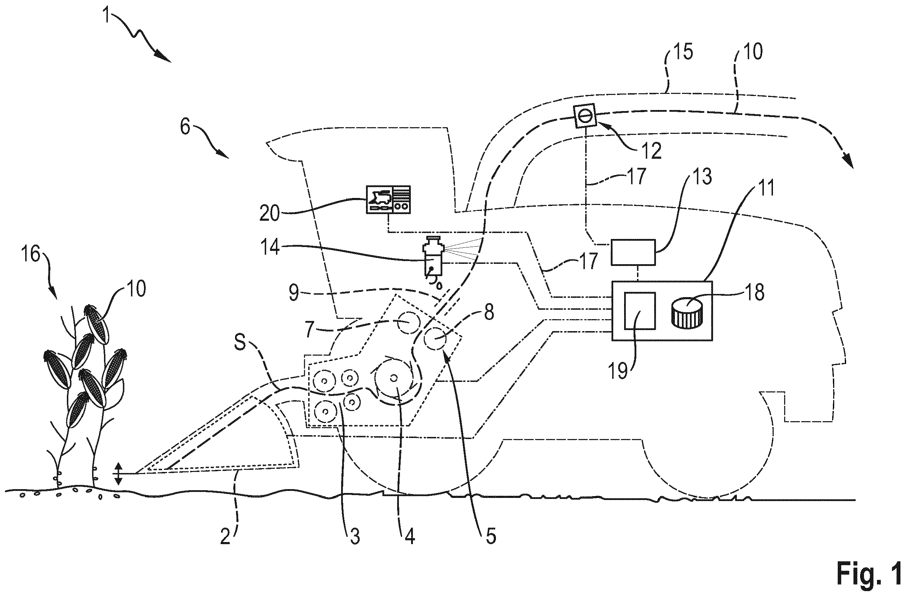

In Fig. 1 ist schematisch eine Seitenansicht einer landwirtschaftlichen Erntemaschine 1 gezeigt. Die Erntemaschine 1 ist im dargestellten Ausführungsbeispiel als ein selbstfahrender Feldhäcksler 6 ausgeführt. Die Erntemaschine 1 kann auch als ein selbstfahrender Mähdrescher ausgeführt sein.

Die Erntemaschine 1 umfasst ein Vorsatzgerät 2, welches der Aufnahme von Erntegut 10 durch das Abernten eines Feldbestands 16 dient. Von dem Vorsatzgerät gelangt das Erntegut 10 als Erntegutstrom S in eine mehrere angetriebene Walzen aufweisende Einzugsvorrichtung 3, an die sich eine Häckselvorrichtung 4 in Gutflussrichtung anschließt. Die Häckselvorrichtung 4 umfasst eine rotierende Messertrommel zum zerkleinern bzw. häckseln des Erntegutes 10. Mit Erntegutstrom S ist das durch Abernten des Feldbestands 16 erzeugte, zerkleinerte Erntegut 10 gemeint, welches durch den Förderkanal 9 strömt und anschließend von einem Transportfahrzeug aufgenommen und abtransportiert werden kann.

Der Häckselvorrichtung 4 ist eine optionale Nachzerkleinerungsvorrichtung 5 nachgeordnet. Die Nachzerkleinerungsvorrichtung 5 wird auch als Corn Cracker oder Crop Cracker bezeichnet und dient dem Aufschluss von Kornbestandteilen im Erntegutstrom. Ist während eines Erntevorganges der Betrieb der Nachzerkleinerungsvorrichtung 5 nicht erforderlich, z.B. bei der Grasernte, so lässt sich die Nachzerkleinerungsvorrichtung 5 aus dem Erntegutstrom 10 herausschwenken oder ausbauen. Die Nachzerkleinerungsvorrichtung 5 weist zwei angetriebene Walzen 7, 8 auf, die mit unterschiedlichen Drehzahlen angetrieben sind. Die Drehzahldifferenz der Walzen 7, 8 ist dabei veränderbar. Mittels der Nachzerkleinerungsvorrichtung 5 werden bei der Bearbeitung von Mais die in dem Erntegutstrom S enthaltenen Kornbestandteile aufgeschlossen sowie Stängelstücke zerfasert und Spindelscheiben zerkleinert.

Bei dem Vorsatzgerät 2, der Einzugsvorrichtung 3, der Häckselvorrichtung 4 sowie der Nachzerkleinerungsvorrichtung 5 handelt es sich um Arbeitsaggregate der Erntemaschine 1, die der Bearbeitung des aufgenommenen Ernteguts dienen.

Im weiteren Verlauf wird der Erntegutstrom S in einem Förderkanal 9 an einer Siliermittelanlage 14 vorbeigeführt, durch die dem Erntegutstrom S ein Siliermittel zuführbar ist. Anschließend passiert der Erntegutstrom S einen NIR-Sensor 12, einen auf Basis der Nahinfrarotspektroskopie arbeitenden Sensor, der hier beispielhaft in einer Überladevorrichtung 15 angeordnet ist. Grundsätzlich kann der NIR-Sensor 12 aber auch an einer anderen Stelle entlang des Erntegutstroms S an oder in dem Förderkanal 9 angeordnet sein. Dabei ist der NIR-Sensor 12 stets dem Arbeitsaggregat 2, 3, 4, 5 nachgeordnet angeordnet, dessen Betriebsparameter angepasst werden sollen.

Der NIR-Sensor 12 erfasst die unterschiedlichen Farbspektren der in dem Erntegutstrom 10 enthaltenen Kornbestandteile, die in Abhängigkeit von unterschiedlichen Aufschlussgraden der Kornbestandteile nach deren Bearbeitung durch die Nachzerkleinerungsvorrichtung 5 resultieren. Die Signale des NIR-Sensors 12 werden von einer Auswertungsvorrichtung 11 empfangen und ausgewertet. Hierzu steht die Auswertevorrichtung 11 mittels eines Bussystems 17 oder durch drahtlos arbeitende Kommunikationsmittel mit dem NIR-Sensor 12 in Verbindung.

Die Auswertevorrichtung 11 umfasst eine Speichervorrichtung 18 sowie eine Rechenvorrichtung 19. Durch das Bussystem 17 ist die Auswertevorrichtung 11 mit einer Eingabe- und Ausgabevorrichtung 20 verbunden, die vorzugsweise in einer Kabine der Erntemaschine 1 angeordnet ist. Die Eingabe- und Ausgabevorrichtung 20 dient der Visualisierung von Betriebsparametern der Erntemaschine 1 sowie deren Arbeitsaggregaten 2, 3, 4, 5. Darüber hinaus ermöglicht es die Eingabe- und Ausgabevorrichtung 20 einer Bedienperson der Erntemaschine 1 Einstellungen der Betriebsparameter zumindest der Arbeitsaggregate 2, 3, 4, 5 vorzunehmen bzw. anzupassen. Die Ansteuerung der Arbeitsaggregate 2, 3, 4, 5 kann mittels einer Einstelleinheit 13 durchgeführt werden. Hierzu kann die Einstelleinheit 13 Steuerungsdaten von der Auswertevorrichtung 11 empfangen, um auf Basis dieser Daten eines oder mehrere der Arbeitsaggregate 2, 3, 4, 5 anzusteuern bzw. mindestens eine Betriebsparametereinstellung des jeweiligen Arbeitsaggregats 2, 3, 4, 5 durchzuführen.

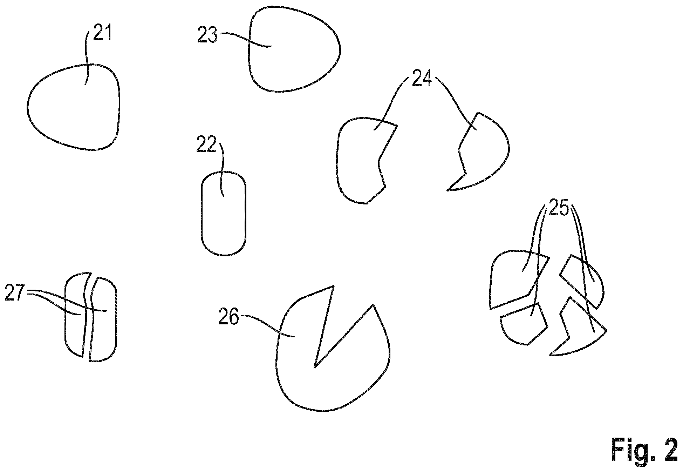

In Fig. 2 sind exemplarisch schematisch Kornbestandteile 21, 22 vor der Bearbeitung sowie Kornbestandteile 23, 24, 25, 26, 27 nach der Bearbeitung durch die Nachzerkleinerungsvorrichtung 5 dargestellt. Die als ein ganzes Korn vorliegenden Kornbestandteile 21, 22 sollen bei einer Verwendung als Futtermittel für Wiederkäuer zur besseren Verdaulichkeit aufgeschlossen werden, d.h. sie müssen mindestens einmal auseinandergebrochen sein. Hierzu werden die ganzen Körner 21, 22 der Nachbearbeitungsvorrichtung 5 zugeführt.

In Abhängigkeit von dem oder den eingestellten Betriebsparametern der Nachbearbeitungsvorrichtung 5 können die als ganze Körner zu bearbeitenden Kornbestandteile 21, 22 beim Verlassen der Nachbearbeitungsvorrichtung 5 verschiedene Aufschlussgrade aufweisen. In Fig. 2 sind einige Kornbestandteile nach der Bearbeitung unter Verwendung unterschiedlicher Betriebsparameter der Nachzerkleinerungsvorrichtung 5 beispielhaft dargestellt. So weist ein Kornbestandteil 23 trotz durch die Bearbeitung durch Nachzerkleinerungsvorrichtung 5 keinen Aufschluss auf, d.h. es entspricht dem Kornbestandteil 21 vor der Bearbeitung. Ein Kornbestandteil 24 bzw. 27 wurde in zumindest zwei separate, nicht zusammenhängende Teile aufgeschlossen. Ein Kornbestandteil 25 wurde in mehrere separate Teile aufgeschlossen. Ein Kornbestandteil 26 hingegen wurde lediglich durch die Bearbeitung angeschlagen, so dass es nur partiell aufgespalten wurde.

Diese beispielhaft dargestellten unterschiedlichen Aufschlussgrade der jeweiligen Kornbestandteile 23 bis 27, die sich nach der Bearbeitung durch die Nachbearbeitungsvorrichtung 5 einstellen können, werden mittels des NIR-Sensors 12 bestimmt. Der NIR-Sensor 12 erfasst die unterschiedlichen Farbspektren der bearbeiteten Kornbestandteile 23 bis 27, welche aus den unterschiedlichen Aufschlussgraden resultieren. Zur Auswertung ist vorgesehen, dass in der Speichervorrichtung 18 der Auswertevorrichtung 11 Informationen hinsichtlich des bestehenden Zusammenhangs zwischen den unterschiedlichen Aufschlussgraden der Kornbestandteile 23 bis 27 und den jeweils damit korrespondierenden Farbspektren hinterlegt sind. Durch einen Vergleich der durch den NIR-Sensor 12 erfassten Farbspektren der mit dem Erntegutstrom 10 vorbeiströmenden, bearbeiteten Kornbestandteile 23 bis 27 mit den als Referenzwerte in der Speichervorrichtung 18 hinterlegten Farbspektren wird auf den Aufschlussgrad dieser Kornbestandteile 23 bis 27 geschlossen. Entsprechend der Güte des durch die Auswertevorrichtung 11 bestimmten Aufschlussgrades kann auf die Qualität der Einstellung des oder der Betriebsparameter der Nachzerkleinerungsvorrichtung 5 geschlossen werden.

Bevorzugt ist eine Kategorisierung vorgesehen, welche sich an einem Betriebsparameter der Nachzerkleinerungsvorrichtung 5 orientiert. Insbesondere wird eine Kategorisierung anhand des Betriebsparameters Walzenabstand der Walzen 7, 8 vorgenommen. Der Walzenabstand der Walzen 7, 8 der Nachzerkleinerungsvorrichtung 5 beeinflusst maßgeblich den Aufschlussgrad sowie den Energieverbrauch der Erntemaschine 1. Je geringer der Abstand zwischen den Walzen 7, 8, desto größer ist der Aufschlussgrad der Kornbestandteile und der für den Antrieb der Walzen 7, 8 erforderliche Energiebedarf. Ein jeweils einstellbarer Walzenabstand bildet eine Kategorie. Der jeweiligen Kategorie wird ein Farbspektrum für einen mit dem Walzenabstand Aufschlussgrad zugeordnet. Hierzu sind Aufschlussgradvorgabewerte in einer Datenbank in der Speichervorrichtung 18 hinterlegt. Durch eine Vergleichsanalyse der von dem NIR-Sensor 12 bereitgestellten Signale zu den Farbspektren kann auf diese Weise der jeweilige Aufschlussgrad in Echtzeit durch die Auswertevorrichtung 11 bestimmt werden.

Beispielsweise können die von dem NIR-Sensor 12 bereitgestellten Signale über einen definierten Zeitraum hinweg statistisch ausgewertet werden, um anhand der auftretenden Häufigkeit spezifischer detektierter Farbspektren eine Kategorisierung vornehmen zu können.

Die durch die Auswertevorrichtung 11 bestimmte Kategorisierung dient dazu, die Qualität des zumindest einen eingestellten Betriebsparameters der Nachzerkleinerungsvorrichtung 5 zu bestimmen. Die Auswertevorrichtung 11 kann automatisiert ein Steuersignal über das Bussystem 17 an die Einstelleinheit 13 übermitteln. Durch das Steuersignal wird eine Anpassung des zumindest einen Betriebsparameters durch die Einstelleinheit 13 vorgenommen. Denkbar ist aber auch, dass die Auswertevorrichtung 11 die Anpassung des zumindest einen Betriebsparameters vornimmt. Weiterhin kann vorgesehen sein, dass die durch die Auswertevorrichtung 11 bestimmte Kategorisierung an die Eingabe- und Ausgabevorrichtung 20 übertragen und der Bedienperson der Erntemaschine 1 zur Kenntnis gebracht wird. Daraufhin kann die Bedienperson selbsttätig entscheiden, ob eine Anpassung des zumindest einen Betriebsparameters notwendig ist, um den gewünschten Aufschlussgrad zu erreichen.

Die Kenntnis des Aufschlussgerades ermöglicht es, einen oder mehrere Betriebsparameter der Nachzerkleinerungsvorrichtung 5 in Abhängigkeit hiervon einzustellen, um die Nachzerkleinerungsvorrichtung 5 optimiert betreiben zu können. Durch die Anpassung der Einstellung des Walzenabstands lässt sich ein optimaler Aufschlussgrad erreichen, wodurch Kraftstoff eingespart wird, da die Nachzerkleinerungsvorrichtung 5 nicht mit einem zu geringen Walzenabstand betrieben wird. Zudem kann ergänzend die Differenzdrehzahl der Walzen 7,8 eingestellt werden, wenn der detektierte Aufschlussgrad trotz einer angepassten Einstellung des Walzenabstandes nicht den gewünschten Einfluss auf das Arbeitsergebnis zeigt. Des Weiteren ermöglicht die auf die Bestimmung eines Aufschlussgrades der in dem Erntegutstrom S enthaltenen bearbeiteten Kornbestandteile 23 bis 27 gerichtete Analyse der Signale des NIR-Sensors 12 das Feststellen einer Fehlfunktion der Nachzerkleinerungsvorrichtung 5, wenn Zähne der Walzen 7, 8 verschlissen sind.

### Bezugszeichenliste

- 1: Erntemaschine
- 2: Vorsatzgerät
- 3: Einzugsvorrichtung
- 4: Häckselvorrichtung
- 5: Nachzerkleinerungsvorrichtung
- 6: Feldhäcksler
- 7: Walze
- 8: Walze
- 9: Förderkanal
- 10: Erntegut
- 11: Auswertevorrichtung
- 12: NIR-Sensor
- 13: Einstelleinheit
- 14: Siliermittelanlage
- 15: Überladevorrichtung
- 16: Feldbestand
- 17: Bussystem
- 18: Speichervorrichtung
- 19: Rechenvorrichtung
- 20: Eingabe- und Ausgabevorrichtung
- 21: Unbearbeiteter Kornbestandteil
- 22: Unbearbeiteter Kornbestandteil
- 23: Bearbeiteter Kornbestandteil
- 24: Bearbeiteter Kornbestandteil
- 25: Bearbeiteter Kornbestandteil
- 26: Bearbeiteter Kornbestandteil
- 27: Bearbeiteter Kornbestandteil

- S: Erntegutstrom

## Patentansprüche

1. Landwirtschaftliche Erntemaschine (1), umfassend ein Vorsatzgerät (2) zur Aufnahme von Kornbestandteile (21, 22) enthaltendem Erntegut (10), zumindest ein Arbeitsaggregat (3, 4, 5) zur Bearbeitung des aufgenommenen Ernteguts (10) sowie eine Überladevorrichtung (15), wobei das von dem Vorsatzgerät (2) aufgenommene Erntegut (10) die Erntemaschine (1) als Erntegutstrom (S) durchläuft, wobei entlang des Erntegutstromes (S) dem zumindest einen Arbeitsaggregat (3, 4, 5) ein NIR-Sensor (12) nachgeordnet angeordnet ist, welcher den Erntegutstrom (S) erfasst, und dass eine Auswertevorrichtung (11) die Signale des NIR-Sensors (12) empfängt und analysiert, **dadurch gekennzeichnet, dass** die Analyse der Signale auf die Bestimmung eines Aufschlussgrades der in dem Erntegutstrom (S) enthaltenen Kornbestandteile (23 bis 27) gerichtet ist.

2. Erntemaschine (1) nach Anspruch 1, **dadurch gekennzeichnet, dass** in Abhängigkeit von dem bestimmten Aufschlussgrad der Kornbestandteile (23 bis 27) wenigstens ein Betriebsparameter des zumindest einen Arbeitsaggregates (3, 4, 5) einstellbar ist.

3. Erntemaschine (1) nach Anspruch 2, **dadurch gekennzeichnet, dass** die Einstellung des wenigstens einen Betriebsparameters automatisch oder nach Bestätigung durch eine Bedienperson der Erntemaschine (1) erfolgt.

4. Erntemaschine (1) nach einem der Ansprüche 1 bis 3, **dadurch gekennzeichnet, dass** die Auswertevorrichtung (11) eine Speichervorrichtung (18) umfasst, in welcher eine mit Referenzwerten für unterschiedliche Aufschlussgrade enthaltene Datenbank hinterlegt ist.

5. Erntemaschine (1) nach einem der vorangehenden Ansprüche, **dadurch gekennzeichnet, dass** die Bestimmung des Aufschlussgrades der in dem Erntegutstrom (S) enthaltenen Kornbestandteile (23 bis 27) anhand eines Vergleichs von Farbspektren durch die Auswertevorrichtung (11) erfolgt.

6. Erntemaschine (1) nach einem der vorangehenden Ansprüche, **dadurch gekennzeichnet, dass** in Abhängigkeit von zumindest einem Betriebsparameter des zumindest einen Arbeitsaggregates (3, 4, 5) eine Kategorisierung von Aufschlussgradvorgabewerten vorgesehen ist, welche die Auswertevorrichtung (11) zur Analyse des durch den NIR-Sensor (12) erfassten Aufschlussgrades verwendet.

7. Erntemaschine (1) nach einem der vorangehenden Ansprüche, **dadurch gekennzeichnet, dass** die Erntemaschine (1) als Feldhäcksler (6) oder Mähdrescher ausgebildet ist.

8. Erntemaschine (1) nach einem der vorangehenden Ansprüche, **dadurch gekennzeichnet, dass** das zumindest eine Arbeitsaggregat eine Nachzerkleinerungsvorrichtung (5) ist.

9. Erntemaschine (1) nach Anspruch 8, **dadurch gekennzeichnet, dass** als Betriebsparameter ein Abstand von Walzen (7, 8) und/oder eine Differenzdrehzahl der Walzen (7, 8) der Nachzerkleinerungsvorrichtung (5) einstellbar ist.

10. Erntemaschine (1) nach Anspruch 8 oder 9, **dadurch gekennzeichnet, dass** ein an der Nachzerkleinerungsvorrichtung (5) auftretender Verschleiß durch die Bestimmung des Aufschlussgrades detektierbar ist.

11. Verfahren zum Betreiben einer landwirtschaftlichen Erntemaschine (1), umfassend ein Vorsatzgerät zur Aufnahme von Kornbestandteile (21, 22) enthaltendem Erntegut (10), zumindest ein Arbeitsaggregat (3, 4, 5) zur Bearbeitung des aufgenommenen Ernteguts (10) sowie eine Überladevorrichtung (15), wobei das vom Vorsatzgerät (2) aufgenommene Erntegut (10) die Erntemaschine (1) als Erntegutstrom (S) durchläuft, wobei entlang des Erntegutstromes (S) dem zumindest einen Arbeitsaggregat (3, 4, 5) ein NIR-Sensor (12) nachgeordnet angeordnet ist, durch welchen der Erntegutstrom (S) erfasst wird, und dass die Signale des NIR-Sensors (12) von einer Auswertevorrichtung (11) empfangen und analysiert werden, **dadurch gekennzeichnet, dass** durch die Analyse der von dem NIR-Sensor (12) bereitgestellten Signale ein Aufschlussgrad der in dem Erntegutstrom (S) enthaltenen Kornbestandteile (23 bis 27) bestimmt wird.

12. Verfahren nach Anspruch 11, **dadurch gekennzeichnet, dass** zur Bestimmung des Aufschlussgrades Farbspektren der Kornbestandteile (23 bis 27) miteinander verglichen werden.

13. Verfahren nach Anspruch 11 oder 12, **dadurch gekennzeichnet, dass** durch die Auswertevorrichtung (11) Korrelationen der von dem NIR-Sensor (12) bereitgestellten Signale bestimmt und mit in einer Speichervorrichtung (18) hinterlegten Korrelationswerten für unterschiedliche Aufschlussgrade verglichen werden.

14. Verfahren nach einem der Ansprüche 11 bis 13, **dadurch gekennzeichnet, dass** in Abhängigkeit von dem bestimmten Aufschlussgrad der Kornbestandteile (23 bis 27) wenigstens ein Betriebsparameter des zumindest einen Arbeitsaggregates (3, 4, 5) angepasst wird.

## Claims

1. An agricultural harvesting machine (1), comprising a front attachment (2) for receiving harvested material (10) containing grain components (21, 22), at least one working assembly (3, 4, 5) for processing the received harvested material (10) as well as an overhead transfer device (15), wherein the harvested material (10) received by the front attachment (2) passes through the harvesting machine (1) as a flow of harvested material (S), wherein a NIR sensor (12) which detects the flow of harvested material (S) is disposed downstream of the at least one working assembly (3, 4, 5) along the flow of harvested material (S), and in that an evaluation device (11) receives and analyses the signals from the NIR sensor (12), **characterized in that** the analysis of the signals is directed towards the determination of a degree of cracking of the grain components (23 to 27) contained in the flow of harvested material (5).

2. The harvesting machine (1) according to claim 1, **characterized in that** at least one operating parameter of the at least one working assembly (3, 4, 5) can be set as a function of the determined degree of cracking of the grain components (23 to 27).

3. The harvesting machine (1) according to claim 2, **characterized in that** the setting of the at least one operating parameter is carried out automatically or after confirmation by an operator of the harvesting machine (1).

4. The harvesting machine (1) according to one of claims 1 to 3, **characterized in that** the evaluation device (11) comprises a storage device (18) in which a database containing reference values for different degrees of cracking is stored.

5. The harvesting machine (1) according to one of the preceding claims, **characterized in that** the determination of the degree of cracking of the grain components (23 to 27) contained in the flow of harvested material (S) is carried out by the evaluation device (11) with the aid of a comparison of colour spectra.

6. The harvesting machine (1) according to one of the preceding claims, **characterized in that** a categorisation of degree of cracking setpoint values which depends on at least one operating parameter of the at least one working assembly (3, 4, 5) is provided, which the evaluation device (11) uses for the analysis of the degree of cracking detected by the NIR sensor (2).

7. The harvesting machine (1) according to one of the preceding claims, **characterized in that** the harvesting machine (1) is configured as a forage harvester (6) or a combine harvester.

8. The harvesting machine (1) according to one of the preceding claims, **characterized in that** the at least one working assembly is a secondary crushing device (5).

9. The harvesting machine (1) according to claim 8, **characterized in that** a separation of rollers (7, 8) and/or a differential rotational speed of the rollers (7, 8) of the secondary crushing device (5) can be set as the operating parameter.

10. The harvesting machine (1) according to claim 8 or claim 9, **characterized in that** wear occurring in the secondary crushing device (5) can be detected by the determination of the degree of cracking.

11. A method for operating an agricultural harvesting machine (1), comprising a front attachment (2) for receiving harvested material (10) containing grain components (21, 22), at least one working assembly (3, 4, 5) for processing the received harvested material (10) as well as an overhead transfer device (15), wherein the harvested material (10) received by the front attachment (2) passes through the harvesting machine (1) as a flow of harvested material (S), wherein a NIR sensor (12) which detects the flow of harvested material (S) is disposed downstream of the at least one working assembly (3, 4, 5) along the flow of harvested material (S), and in that the signals from the NIR sensor (12) are received and analysed by an evaluation device (11), **characterized in that** a degree of cracking of the grain components (23 to 27) contained in the flow of harvested material (S) is determined by the analysis of the signals provided by the NIR sensor (12).

12. The method according to claim 11, **characterized in that** colour spectra of the grain components (23 to 27) are compared with each other in order to determine the degree of cracking.

13. The method according to claim 11 or claim 12, **characterized in that** correlations of the signals provided by the NIR sensor (12) are determined by the evaluation device (11) and compared with correlation values for different degrees of cracking which are stored in a storage device (18).

14. The method according to one of claims 11 to 13, **characterized in that** at least one operating parameter of the at least one working assembly (3, 4, 5) is adjusted as a function of the determined degree of cracking of the grain components (23 to 27).

## Revendications

1. Machine de récolte (1) agricole comprenant un outil frontal (2) pour la réception de produit à récolter (10) contenant des constituants de grain (21, 22), au moins un groupe de travail (3, 4, 5) pour le traitement du produit à récolter (10) reçu ainsi qu'un dispositif de surcharge (15), dans lequel le produit à récolter (10) reçu par l'outil frontal (2) traverse la machine de récolte (1) comme courant (S) de produit à récolter, dans lequel le long du courant (S) de produit à récolter est agencé un capteur NIR (12) agencé en aval de l'au moins un groupe de travail (3, 4, 5), lequel détecte le courant (S) de produit à récolter, et qu'un dispositif d'évaluation (11) reçoit et analyse les signaux du capteur NIR (12), **caractérisée en ce que** l'analyse des signaux est dirigée sur la détermination d'un degré de libération des constituants de grain (23 à 27) contenus dans le courant (S) de produit à récolter.

2. Machine de récolte (1) selon la revendication 1, **caractérisée en ce qu'**en fonction du degré de libération déterminé des constituants de grain (23 à 27), au moins un paramètre de fonctionnement de l'au moins un groupe de travail (3, 4, 5) est réglable.

3. Machine de récolte (1) selon la revendication 2, **caractérisée en ce que** le réglage d'au moins un paramètre de fonctionnement est automatiquement effectué ou après confirmation par un opérateur de la machine de récolte (1).

4. Machine de récolte (1) selon l'une des revendications 1 à 3, **caractérisé en ce que** le dispositif d'évaluation (11) comporte un dispositif de mémoire (18), dans lequel une base de données contenue avec des valeurs de référence pour différents degrés de libération est enregistrée.

5. Machine de récolte (1) selon l'une des revendications précédentes, **caractérisé en ce que** la détermination du degré de libération des constituants de grain (23 à 27) contenus dans le courant (S) de produit à récolter est effectuée à l'aide d'une comparaison de spectres de couleur par le dispositif d'évaluation (11).

6. Machine de récolte (1) selon l'une des revendications précédentes, **caractérisé en ce qu'**en fonction d'au moins un paramètre de fonctionnement d'au moins un groupe de travail (3, 4, 5), une catégorisation de valeurs de prescription de degré de libération est prévue, laquelle utilise le dispositif d'évaluation (11) pour l'analyse du degré de libération détecté par le capteur NIR (12).

7. Machine de récolte (1) selon l'une des revendications précédentes, **caractérisé en ce que** la machine de récolte (1) est réalisée comme ensileuse (6) ou moissonneuse-batteuse.

8. Machine de récolte (1) selon l'une des revendications précédentes, **caractérisé en ce que** l'au moins un groupe de travail est un dispositif de broyage secondaire (5).

9. Machine de récolte (1) selon la revendication 8, **caractérisé en ce qu'**une distance entre les rouleaux (7, 8) et/ou une vitesse de rotation différentielle des rouleaux (7, 8) du dispositif de broyage secondaire (5) est réglable comme paramètre de fonctionnement.

10. Machine de récolte (1) selon la revendication 8 ou 9, **caractérisé en ce qu'**une usure survenant sur le dispositif de broyage secondaire (5) peut être détectée par la détermination du degré de libération.

11. Procédé de fonctionnement d'une machine de récolte (1) agricole, comprenant un outil frontal pour la réception de produit à récolter (10) contenant des constituants de grain (21, 22), au moins un groupe de travail (3, 4, 5) pour le traitement du produit à récolter (10) reçu ainsi qu'un dispositif de surcharge (15), dans lequel le produit à récolter (10) reçu par l'outil frontal (2) traverse la machine de récolte (1) comme courant (S) de produit à récolter, dans lequel le long du courant (S) de produit à récolter est agencé un capteur NIR (12) agencé en aval d'au moins un groupe de travail (3, 4, 5), par lequel le courant (S) de produit à récolter est détecté, et que les signaux du capteur NIR (12) sont reçus et analysés par un dispositif d'évaluation (11), **caractérisé en ce qu'**un degré de libération des constituants de grain (23 à 27) contenus dans le courant (S) de produit à récolter est déterminé par l'analyse des signaux fournis par le capteur NIR (12).

12. Procédé selon la revendication 11, **caractérisé en ce que** des spectres de couleur des constituants de grain (23 à 27) sont comparés les uns aux autres pour la détermination du degré de libération.

13. Procédé selon la revendication 11 ou 12, **caractérisé en ce que** des corrélations des signaux fournis par le capteur NIR (12) sont déterminées par le dispositif d'évaluation (11) et sont comparées avec des valeurs de corrélation enregistrées dans un dispositif de mémoire (18) pour différents degrés de libération.

14. Procédé selon l'une des revendications 11 à 13, **caractérisé en ce qu'**au moins un paramètre de fonctionnement d'au moins un groupe de travail (3, 4, 5) est adapté en fonction du degré de libération déterminé des constituants de grain (23 à 27).
